# FASCICULE DE BREVET EUROPEEN

(11) **EP 3 986 754 B1**
(45) Date de publication et mention de la délivrance du brevet: **14.01.2026**
(21) Numéro de dépôt: 20743198.2
(22) Date de dépôt: 09.06.2020
(51) Int. Cl.: B60R 16/023, B60R 25/24

(54) **VÉHICULE AUTOMOBILE PERMETTANT DE STOCKER TEMPORAIREMENT UN COLIS DE LIVRAISON**
KRAFTFAHRZEUG ZUR ERMÖGLICHUNG DER VORÜBERGEHENDEN LAGERUNG EINES LIEFERPAKETS
MOTOR VEHICLE ALLOWING THE TEMPORARY STORAGE OF A DELIVERY PACKAGE

(30) Priorité: 24.06.2019 FR 1906773
(43) Date de publication de la demande: 27.04.2022
(73) Titulaire: NOVARES France, 78140 Vélizy-Villacoublay (FR)
(72) Inventeur: REICHHELD, Frédérick, 06500 MENTON (FR); CAZES, Christophe, 78000 VERSAILLES (FR); BOLLIER, François, 06300 NICE (FR)
(74) Mandataire: Germain Maureau
(86) Numéro de dépôt international: PCT/FR2020/050982
(87) Numéro de publication internationale: WO 2020/260787

(56) Documents cités:
- EP-A1- 3 104 340
- EP-A1- 3 121 775
- EP-A1- 3 399 480
- EP-A1- 3 419 241
- WO-A1-2018/081697
- DE-A1- 102016 014 864
- DE-A1- 102017 219 558
- DE-A1- 4 212 207
- FR-A1- 3 063 457
- US-A1- 2017 253 137
- US-A1- 2018 072 254

## Description

L'invention concerne un véhicule automobile permettant de stocker temporairement un colis de livraison. Un tel véhicule formant part de l'art antérieur est par exemple décrit dans US 2018 072 254 A.

Elle concerne également un dispositif de stockage temporaire de colis de livraison ainsi qu'un procédé de livraison de colis mettant en œuvre ledit dispositif.

Dans le domaine de la livraison de colis, il est connu d'utiliser des boîtes de stockage temporaire de colis disposées dans un espace dédié de la société chargée de l'acheminement, dans lesquelles le colis est déposé et stocké temporairement en vue d'être récupéré par le client par la suite. Ces boîtes de stockage temporaire sont généralement fermées par une serrure, l'ouverture de ladite serrure pouvant être actionnable soit par une clé, soit par un code numérique que seul le client final possède. L'inconvénient de tels dispositifs de stockage temporaire est souvent leur éloignement par rapport au domicile ou au lieu de travail du client. Le client est donc obligé de se déplacer pour pouvoir récupérer son colis. Par ailleurs, le délai pour pouvoir récupérer son colis est souvent limité dans le temps. Une fois le délai expiré, le colis est alors réexpédié au fournisseur. Le client est donc obligé de payer des frais supplémentaires au fournisseur pour que le colis lui soit expédié à nouveau.

La présente invention vise donc à proposer un dispositif de stockage temporaire de colis de livraison ne présentant pas les inconvénients précités, et, en particulier, un dispositif de stockage temporaire de colis de livraison pouvant être positionné à proximité du domicile ou du lieu de travail du client et permettant au client de récupérer son colis à toute heure et sans avoir à respecter un délai limité dans le temps.

A cet effet, l'invention concerne un véhicule automobile comprenant un habitacle accessible de l'extérieur par au moins une portière latérale et un coffre accessible de l'extérieur par au moins un hayon arrière, ladite portière latérale et ledit hayon arrière pouvant être ouverts, respectivement fermés, à l'aide de premiers moyens d'ouverture/fermeture, le véhicule comprenant de plus un compartiment de stockage accessible de l'extérieur au travers d'une ouverture formée dans la carrosserie du véhicule et une trappe d'accès disposée au niveau de ladite ouverture, ladite trappe d'accès étant mobile sous l'action de deuxièmes moyens d'ouverture/fermeture entre une position de fermeture, dans laquelle elle empêche l'accès audit compartiment de stockage, et une position d'ouverture, dans laquelle elle permet l'accès audit compartiment de stockage, et en ce que le compartiment de stockage est disposé dans une zone interne du véhicule qui est située dans une partie avant du véhicule et qui est séparée de l'habitacle et du coffre, caractérisé en ce que les deuxièmes moyens d'ouverture/fermeture sont différents des premiers moyens d'ouverture/fermeture et sont aptes à commander l'ouverture, respectivement la fermeture, de ladite trappe d'accès par l'émission d'un signal ultrasonique.

Ainsi configuré, le véhicule automobile permettra de stocker temporairement un colis à livrer dans son compartiment de stockage accessible de l'extérieur au travers d'une trappe d'accès. Ce véhicule étant généralement stationné à proximité du domicile ou du lieu de travail du client, le client n'aura plus besoin de se déplacer pour récupérer son colis. Par ailleurs, le compartiment de stockage faisant partie d'un véhicule dont il a généralement l'usage exclusif, le client pourra récupérer son colis au moment où il le désire, sans avoir à respecter une date ou un horaire limite imposé par l'entreprise d'acheminement. En outre, étant donné que le compartiment de stockage est séparé de l'habitacle et du coffre, un livreur en possession des moyens d'ouverture/fermeture permettant l'ouverture de la trappe donnant accès au compartiment de stockage ne pourra pas accéder à l'habitacle ou au coffre du véhicule. Le risque d'une éventuelle violation de l'espace privé du client est ainsi évité. Par ailleurs, la possibilité que la trappe ne puisse être ouvert que par des moyens d'ouverture/fermeture spécifiques ne donnant pas accès à l'habitacle ou au coffre permettra que le colis puisse être récupéré par une autre personne que le propriétaire du véhicule. Dans cette configuration avantageuse, le véhicule pourrait donc constituer un espace de stockage temporaire de colis de livraison à part entière, espace que toute personne en possession des moyens d'ouverture/fermeture spécifiques pourrait utiliser à sa guise. Par ailleurs, ce compartiment de stockage pourrait être réfrigéré pour pouvoir stocker des denrées périssables.

Le véhicule de la présente invention pourra également comprendre une ou plusieurs des caractéristiques suivantes, prises isolément ou de manière combinée :
- l'ouverture est formée dans une extrémité avant du véhicule.
- le véhicule automobile est du type électrique.
- le véhicule automobile est géolocalisable.

L'invention porte également sur un dispositif de stockage temporaire de colis de livraison, comprenant :
- un compartiment de stockage destiné à équiper un véhicule tel que défini précédemment, ledit compartiment de stockage étant accessible de l'extérieur au travers d'une trappe d'accès mobile entre une position de fermeture, dans laquelle elle empêche l'accès audit compartiment de stockage, et une position d'ouverture, dans laquelle elle permet l'accès audit compartiment de stockage ;
- des moyens d'ouverture/fermeture aptes à déplacer ladite trappe d'accès de sa position de fermeture à sa position d'ouverture et vice versa.

Dans l'invention, les moyens d'ouverture/fermeture sont aptes à commander l'ouverture, respectivement la fermeture, de ladite trappe d'accès par l'émission d'un signal ultrasonique.

Dans une autre configuration particulière de l'invention, les moyens d'ouverture/fermeture consistent en un appareil électronique choisi parmi un téléphone portable, un smartphone ou une tablette.

L'invention porte également sur un procédé de livraison de colis en provenance d'un expéditeur et à destination d'un client mettant en œuvre le dispositif de stockage temporaire de colis de livraison tel que défini précédemment, ledit procédé comprenant les étapes de :
- transport d'un colis à livrer d'un lieu d'expédition jusqu'à un lieu de stationnement d'un véhicule tel que défini précédemment;
- ouverture d'une trappe donnant accès à un compartiment de stockage dudit véhicule ;
- dépôt du colis à livrer dans ledit compartiment de stockage ;
- fermeture de la trappe.

Dans l'invention, l'ouverture et la fermeture de la trappe sont commandées par l'émission d'un signal ultrasonique.

Dans une autre configuration particulière de l'invention, le signal ultrasonique est émis par un appareil électronique choisi parmi un téléphone portable, un smartphone ou une tablette.

L'invention sera davantage comprise à la lecture de la description non limitative qui va suivre, faite en référence aux figures ci-annexées.
- la figure 1 est une vue de côté d'un véhicule automobile selon la présente invention.
- la figure 2 est une vue partielle et en perspective de l'extrémité avant du véhicule de la figure 1, dans la position de fermeture de la trappe d'accès.
- la figure 3 est une vue similaire à la figure 2, partiellement tronquée, dans la position d'ouverture de la trappe d'accès.
- la figure 4 est une vue d'un exemple de moyen d'ouverture/fermeture permettant l'ouverture, respectivement la fermeture, de la trappe d'accès représentée sur la figure 2.

Dans le présent descriptif, les termes avant et arrière font référence respectivement aux directions avant et arrière du véhicule selon le sens de déplacement dudit véhicule. Les termes supérieur et inférieur font référence respectivement à des orientations dirigées vers le haut et vers le bas. Les termes intérieur ou interne et extérieur ou externe font référence respectivement à des orientations dirigées vers l'intérieur et vers l'extérieur du véhicule.

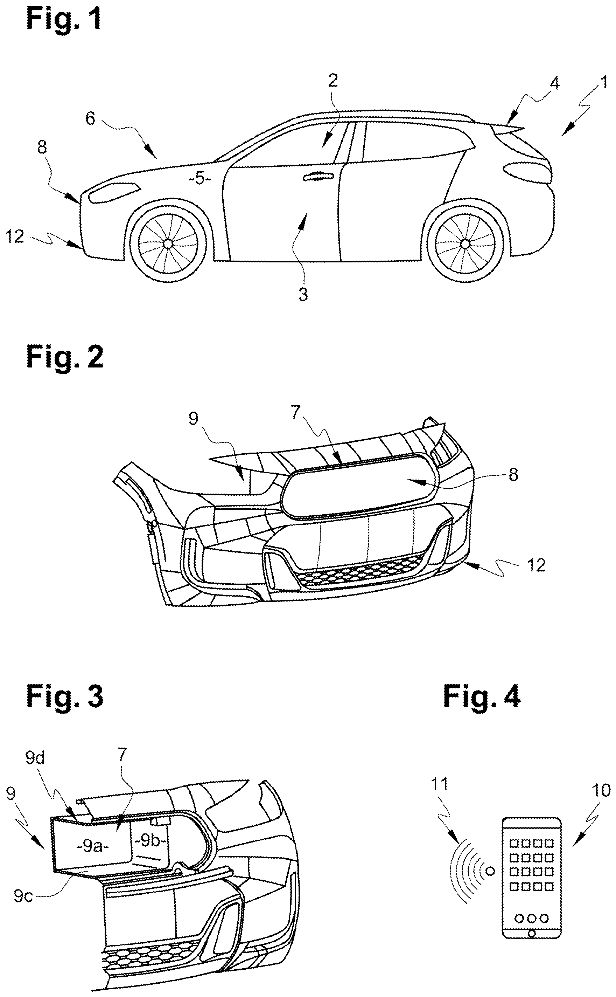

En référence à la figure 1, il est représenté un exemple de véhicule 1 automobile selon la présente invention. Dans la configuration représentée, le véhicule 1 est du type berline. L'invention n'est toutefois pas limitée à ce type de véhicule et tout autre type de véhicule pourrait être envisagée. En particulier, l'invention pourrait porter sur un véhicule de type coupé, monospace, break, ou utilitaire par exemple. L'invention pourrait également porter sur un véhicule de type camion. Le véhicule 1 possède en particulier un habitacle 2 accessible de l'extérieur par au moins une portière latérale 3 et un coffre (non représenté) accessible de l'extérieur par un hayon arrière 4. La portière latérale 3 et le hayon arrière 4 pourront être ouverts, respectivement fermés, au moyen d'une clé, dans le cas d'une ouverture, respectivement fermeture, manuelle, et/ou au moyen d'une télécommande intégrée dans ladite clé, dans le cas d'une ouverture, respectivement fermeture, électrique. D'autres moyens d'ouverture/fermeture pourront toutefois être envisagés en lieu et place de ladite clé ou de ladite télécommande.

Le véhicule 1 comporte par ailleurs une partie avant 6 à l'intérieur de laquelle est disposée un compartiment de stockage 9, comme illustré sur les figures 2 et 3. Ce compartiment de stockage 9, de forme sensiblement parallélépipédique, est délimité par une paroi arrière 9a, deux parois latérales 9b, une paroi inférieure 9c et une paroi supérieure 9d. Ce compartiment de stockage 9 pourra être réfrigéré pour pouvoir stocker des denrées périssables. Il est ouvert sur sa face avant de manière à permettre l'introduction d'un colis à l'intérieur du compartiment de stockage 9. Cette face avant est sensiblement coplanaire avec une ouverture 7 pratiquée dans la carrosserie 5 du véhicule 1, au niveau de son extrémité avant 12. Comme représenté sur les figures 2 et 3, l'ouverture 7 pourra être obturée ou pas par une trappe 8 en réponse à un signal d'ouverture/fermeture émis par des moyens d'ouverture/fermeture. Un exemple de tels moyens d'ouverture/fermeture est notamment représenté sur la figure 4. Il consiste en un téléphone portable 10 apte à émettre un signal ultrasonique 11 en direction du véhicule 1. Ce signal ultrasonique 11 pourra ainsi être capté par des capteurs correspondants installés dans le véhicule 1. En réponse à ce signal 11, les capteurs génèreront un signal électrique ou électronique à destination d'une unité de commande centrale du véhicule 1 de telle sorte à produire le déplacement de la trappe 8 de sa position de fermeture, représentée sur la figure 2, à sa position d'ouverture, représentée sur la figure 3 ou inversement, de sa position d'ouverture à sa position de fermeture.

Ainsi, lors d'un processus de livraison d'un colis conforme à l'invention, un livreur devra d'abord transporter le colis de son lieu d'expédition d'origine jusqu'au lieu du stationnement du véhicule 1. Ce lieu de stationnement du véhicule pourra être communiqué par géolocalisation dudit véhicule 1. Afin de déposer le colis dans le compartiment de stockage 9 du véhicule 1, il ouvrira dans un premier temps la trappe 8 au moyen de son téléphone portable 10, déposera dans un second temps le colis dans le compartiment de stockage 9, et fermera finalement la trappe 8 en utilisant à nouveau son téléphone portable 10. La même séquence d'ouverture et de fermeture de la trappe 8 pourra ensuite être répétée par le destinataire du colis qui, en principe, possèdera un téléphone portable 10 apte à émettre le même signal ultrasonique 11. Il pourra de cette façon retirer le colis stocké provisoirement dans le compartiment de stockage 9. L'utilisation combinée du compartiment de stockage 9 du véhicule 1 fermé par la trappe 8 et du téléphone portable 10 permet ainsi de fournir un dispositif de stockage temporaire de colis de livraison totalement opérationnel et totalement indépendant du reste du véhicule 1.

Bien entendu, l'invention n'est pas limitée à cette configuration particulière. En particulier, d'autres moyens d'émission de signal pourront être envisagées en lieu et place d'un téléphone portable.

Il faut par ailleurs noter que, sur les figures 2 et 3, l'ouverture 7 est positionnée dans une zone de l'extrémité avant 12 qui, généralement, correspond à celle d'une calandre pour un véhicule thermique à traction avant. Dans la configuration représentée, cette calandre est absente du fait que le véhicule est du type électrique. En effet, ce type de véhicule ne nécessite pas l'installation d'un circuit de refroidissement dans la partie avant du véhicule, et, par conséquent, pas d'arrivée d'air à l'avant du véhicule. Cet espace laissé libre par le circuit de refroidissement permet en outre de loger le compartiment de stockage 9.

Par ailleurs, le compartiment de stockage 9 pourra également présenter d'autres formes que la forme parallélépipédique illustrée sur la figure 3. Toute forme pourra être envisagée à ce niveau à partir du moment où elle délimitera un espace interne dans le véhicule qui soit totalement séparé de l'habitacle et du coffre. En effet, un des buts de l'invention est d'empêcher l'accessibilité de l'habitacle et du coffre depuis le compartiment de stockage 9, de telle sorte qu'aucune personne déposant un colis ou retirant un colis du compartiment de stockage 9 ne puisse accéder aux effets personnels que le propriétaire du véhicule aurait laissés dans l'habitacle ou dans le coffre. Par ailleurs, cette séparation entre le compartiment de stockage 9, d'une part, et l'habitacle et le coffre, d'autre part, permettra également d'éviter que le propriétaire du véhicule ou une autre personne en possession des moyens d'ouverture/fermeture de l'habitacle et du coffre n'accède au contenu du compartiment de stockage 9 sans être en possession des moyens d'ouverture/fermeture 10 de la trappe 8.

## Revendications

1. Véhicule (1) automobile comprenant un habitacle (2) accessible de l'extérieur par au moins une portière latérale (3) et un coffre accessible de l'extérieur par au moins un hayon arrière (4), ladite portière latérale (3) et ledit hayon arrière (4) pouvant être ouverts, respectivement fermés, à l'aide de premiers moyens d'ouverture/fermeture, le véhicule (1) comprenant de plus un compartiment de stockage (9) accessible de l'extérieur au travers d'une ouverture (7) formée dans la carrosserie (5) du véhicule (1) et une trappe d'accès (8) disposée au niveau de ladite ouverture (7), ladite trappe d'accès (8) étant mobile sous l'action de deuxièmes moyens d'ouverture/fermeture (10) entre une position de fermeture, dans laquelle elle empêche l'accès audit compartiment de stockage (9), et une position d'ouverture, dans laquelle elle permet l'accès audit compartiment de stockage (9), dans lequel le compartiment de stockage (9) est disposé dans une zone interne du véhicule (1) qui est située dans une partie avant (6) du véhicule (1) et qui est séparée de l'habitacle (2) et du coffre, **caractérisé en ce que** les deuxièmes moyens d'ouverture/fermeture (10) sont différents des premiers moyens d'ouverture/fermeture et sont aptes à commander l'ouverture, respectivement la fermeture, de ladite trappe d'accès (8) par l'émission d'un signal ultrasonique (11).

2. Véhicule (1) selon la revendication 1, **caractérisé en ce que** l'ouverture (7) est formée dans une extrémité avant (12) du véhicule (1).

3. Véhicule (1) selon l'une des revendications précédentes, **caractérisé en ce qu'**il est du type électrique.

4. Véhicule (1) selon l'une des revendications précédentes, **caractérisé en ce qu'**il est géolocalisable.

5. Dispositif de stockage temporaire de colis de livraison, comprenant :
- un compartiment de stockage (9) destiné à équiper un véhicule (1) selon l'une des revendications 1 à 4, ledit compartiment de stockage (9) étant disposé dans une partie avant (6) du véhicule (1) qui est séparée de l'habitacle (2) et du coffre et étant accessible de l'extérieur au travers d'une trappe d'accès (8) mobile entre une position de fermeture, dans laquelle elle empêche l'accès audit compartiment de stockage (9), et une position d'ouverture, dans laquelle elle permet l'accès audit compartiment de stockage (9);
- des moyens d'ouverture/fermeture (10) aptes à déplacer ladite trappe d'accès (8) de sa position de fermeture à sa position d'ouverture et vice versa, **caractérisé en ce que** les moyens d'ouverture/fermeture (10) sont aptes à commander l'ouverture, respectivement la fermeture, de ladite trappe d'accès (8) par l'émission d'un signal ultrasonique (11).

6. Dispositif selon la revendication 5, **caractérisé en ce que** les moyens d'ouverture/fermeture (10) consistent en un appareil électronique choisi parmi un téléphone portable, un smartphone ou une tablette.

7. Procédé de livraison de colis en provenance d'un expéditeur et à destination d'un client mettant en œuvre le dispositif de stockage temporaire de colis de livraison selon l'une des revendications 5 et 6, comprenant les étapes de :
- transport d'un colis à livrer d'un lieu d'expédition jusqu'à un lieu de stationnement d'un véhicule (1) selon l'une des revendications 1 à 4 ;
- ouverture d'une trappe (8) donnant accès à un compartiment de stockage (9) dudit véhicule (1);
- dépôt du colis à livrer dans ledit compartiment de stockage (9);
- fermeture de la trappe (8);
**caractérisé en ce que** l'ouverture et la fermeture de la trappe (8) sont commandées par l'émission d'un signal ultrasonique (11).

8. Procédé selon la revendication 7, **caractérisé en ce que** le signal ultrasonique (11) est émis par un appareil électronique choisi parmi un téléphone portable (10), un smartphone ou une tablette.

## Patentansprüche

1. Kraftfahrzeug (1), das einen von außen durch mindesstens eine Seitentür (3) zugänglichen Innenraum (2) und einen von außen durch mindestens eine Heckklappe (4) zugänglichen Kofferraum umfasst, wobei die Seitentür (3) und die Heckklappe (4) mithilfe erster Öffnungs-/Schließmittel geöffnet bzw. geschlossen werden können, wobei das Fahrzeug (1) ferner ein von außen durch eine in der Karosserie (5) des Fahrzeugs (1) ausgebildete Öffnung (7) zugängliches Ablagefach (9) und eine an der Öffnung (7) angeordnete Zugangsklappe (8) umfasst, wobei die Zugangsklappe (8) durch die Wirkung zweiter Öffnungs-/Schließmittel (10) zwischen einer Schließstellung, in der sie den Zugang zu dem Ablagefach (9) verhindert, und einer Öffnungsstellung, in der sie den Zugang zu dem Ablagefach (9) ermöglicht, beweglich ist, wobei das Ablagefach (9) in einem inneren Bereich des Fahrzeugs (1) angeordnet ist, der sich in einem vorderen Teil (6) des Fahrzeugs (1) befindet und von dem Innenraum (2) und von dem Kofferraum getrennt ist, **dadurch gekennzeichnet, dass** die zweiten Öffnungs-/Schließmittel (10) sich von den ersten Öffnungs-/Schließmitteln unterscheiden und in der Lage sind, das Öffnen bzw. Schließen der Zugangsklappe (8) durch das Senden eines Ultraschallsignals (11) zu steuern.

2. Fahrzeug (1) nach Anspruch 1, **dadurch gekennzeichnet, dass** die Öffnung (7) in einem vorderen Ende (12) des Fahrzeugs (1) ausgebildet ist.

3. Fahrzeug (1) nach einem der vorhergehenden Ansprüche, **dadurch gekennzeichnet, dass** es vom elektrischen Typ ist.

4. Fahrzeug (1) nach einem der vorhergehenden Ansprüche, **dadurch gekennzeichnet, dass** es geolokalisierbar ist.

5. Vorrichtung zur vorübergehenden Lagerung von Lieferpaketen, umfassend:
- ein Ablagefach (9), das dazu bestimmt ist, ein Fahrzeug (1) nach einem der Ansprüche 1 bis 4 auszustatten, wobei das Ablagefach (9) in einem vorderen Teil (6) des Fahrzeugs (1) angeordnet ist, der von dem Innenraum (2) und von dem Kofferraum getrennt ist und von außen durch eine Zugangsklappe (8) zugänglich ist, die zwischen einer Schließstellung, in der sie den Zugang zu dem Ablagefach (9) verhindert, und einer Öffnungsstellung, in der sie den Zugang zu dem Ablagefach (9) ermöglicht, beweglich ist;
- Öffnungs-/Schließmittel (10), die in der Lage sind, die Zugangsklappe (8) von ihrer Schließstellung in ihre Öffnungsstellung und umgekehrt zu bewegen, **dadurch gekennzeichnet, dass** die Öffnungs-/Schließmittel (10) in der Lage sind, das Öffnen bzw. Schließen der Zugangsklappe (8) durch das Senden eines Ultraschallsignals (11) zu steuern.

6. Vorrichtung nach Anspruch 5, **dadurch gekennzeichnet, dass** die Öffnungs-/Schließmittel (10) aus einem elektronischen Gerät bestehen, das aus einem Mobiltelefon, einem Smartphone oder einem Tablet ausgewählt ist.

7. Verfahren zur Lieferung von Paketen von einem Absender an einen Kunden, das die Vorrichtung zur vorübergehenden Lagerung von Lieferpaketen nach einem der Ansprüche 5 und 6 implementiert, umfassend die folgenden Schritte:
- Transportieren eines zu liefernden Pakets von einem Versandort zu einem Abstellort eines Fahrzeugs (1) nach einem der Ansprüche 1 bis 4;
- Öffnen einer Klappe (8), die Zugang zu einem Ablagefach (9) des Fahrzeugs (1) bietet;
- Ablegen des zu liefernden Pakets in dem Ablagefach (9);
- Schließen der Klappe (8);
**dadurch gekennzeichnet, dass** das Öffnen und Schließen der Klappe (8) durch das Senden eines Ultraschallsignals (11) gesteuert wird.

8. Verfahren nach Anspruch 7, **dadurch gekennzeichnet, dass** das Ultraschallsignal (11) von einem elektronischen Gerät ausgesendet wird, das aus einem Mobiltelefon (10), einem Smartphone oder einem Tablet ausgewählt ist.

## Claims

1. A motor vehicle (1) comprising a passenger compartment (2) accessible from the outside by at least one lateral door (3) and a trunk accessible from the outside by at least one rear tailgate (4), said lateral door (3) and said rear tailgate (4) being openable, respectively closable, by means of first opening/closing means, the vehicle (1) further comprising a storage compartment (9) accessible from the outside through an opening (7) formed in the body (5) of the vehicle (1), and an access hatch (8) disposed at said opening (7), said access hatch (8) being movable under the action of second opening/closing means (10) between a closed position, in which it prevents access to said storage compartment (9), and an open position, in which it allows access to said storage compartment (9), wherein the storage compartment (9) is disposed in an internal area of the vehicle (1) which is located in a front part (6) of the vehicle (1) and which is separated from the passenger compartment (2) and the trunk, **characterized in that** the second opening/closing means (10) are different from the first opening/closing means and are able to control the opening, respectively the closing, of said access hatch (8) by the emission of an ultrasonic signal (11).

2. The vehicle (1) according to claim 1, **characterized in that** the opening (7) is formed in a front end (12) of the vehicle (1).

3. The vehicle (1) according to any of the preceding claims, **characterized in that** it is of the electric type.

4. The vehicle (1) according to any of the preceding claims, **characterized in that** it is geolocatable.

5. A device for temporary storing a delivery package, comprising:
- a storage compartment (9) intended to equip a vehicle (1) according to any of claims 1 to 4, said storage compartment (9) being disposed in a front part (6) of the vehicle (1) which is separated from the passenger compartment (2) and the trunk and being accessible from the outside through an access hatch (8) movable between a closed position, in which it prevents access to said storage compartment (9), and an open position, in which it allows access to said storage compartment (9);
- opening/closing means (10) able to move said access hatch (8) from its closed position to its open position and vice versa, **characterized in that** the opening/closing means (10) are able to control the opening or, respectively, the closing of said access hatch (8) by the emission of an ultrasonic signal (11).

6. The device according to claim 5, **characterized in that** the opening/closing means (10) consist of an electronic apparatus selected from a mobile phone, a smartphone, or a tablet.

7. A method for delivering package from a sender and intended for a customer, implementing the device for temporary storing a delivery package according to any of claims 5 and 6, comprising the steps:
- transporting a package to be delivered from a shipping location to a parking location of a vehicle (1) according to any of claims 1 to 4;
- opening a hatch (8) providing access to a storage compartment (9) of said vehicle (1);
- depositing the package to be delivered in said storage compartment (9);
- closing the hatch (8);
**characterized in that** the opening and the closing of the hatch (8) are controlled by the emission of an ultrasonic signal (11).

8. The method according to claim 7, **characterized in that** the ultrasonic signal (11) is emitted by an electronic apparatus selected from a mobile phone (10), a smartphone, or a tablet.
